(19) Europäisches Patentamt
European Patent Office
Office européen des brevets

(11) EP 4 045 385 B1

(12) # FASCICULE DE BREVET EUROPEEN

(45) Date de publication et mention de la délivrance du brevet:
**20.11.2024 Bulletin 2024/47**

(21) Numéro de dépôt: **20781552.3**

(22) Date de dépôt: **05.10.2020**

(51) Classification Internationale des Brevets (IPC):
***B62D 6/00*** *(2006.01)* ***B60W 30/02*** *(2012.01)*
***B62D 6/04*** *(2006.01)* ***B62D 7/15*** *(2006.01)*
***B60W 40/10*** *(2012.01)*

(52) Classification Coopérative des Brevets (CPC):
**B62D 7/159; B60W 30/02; B60W 40/10; B62D 6/002; B62D 6/003; B62D 6/04;**
B60W 2710/207

(86) Numéro de dépôt international:
**PCT/EP2020/077865**

(87) Numéro de publication internationale:
**WO 2021/073925 (22.04.2021 Gazette 2021/16)**

(54) **CONTRÔLEUR HAUT NIVEAU D'UNE ASSISTANCE LATÉRALE ADAPTÉ AUX VÉHICULES 4RD**

STEUERUNG FÜR SEITLICHE UNTERSTÜTZUNG AUF HOHEM NIVEAU FÜR 4HL-FAHRZEUGE

HIGH-LEVEL LATERAL ASSISTANCE CONTROLLER SUITABLE FOR 4WS VEHICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2019 FR 1911396**

(43) Date de publication de la demande:
**24.08.2022 Bulletin 2022/34**

(73) Titulaire: **Ampere SAS**
**92100 Boulogne-Billancourt (FR)**

(72) Inventeurs:
- **ANDA ONDO, Diemer**
  **78300 Poissy (FR)**
- **DO, Anh-Lam**
  **92160 Antony (FR)**
- **HADDAD, Alain**
  **78180 Montigny le bretonneux (FR)**
- **ARZEL, Sébastien**
  **75014 Paris (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**WO-A1-2018/173317**
**JP-A- 2013 086 672**
**US-A1- 2013 261 898**
**WO-A1-2018/173317**
**JP-A- 2013 086 672**
**US-A1- 2013 261 898**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### Domaine technique de l'invention

La présente invention concerne les techniques d'assistance à la conduite d'un véhicule automobile.

Plus précisément, l'invention concerne un procédé d'assistance d'un conducteur à la conduite d'un véhicule automobile équipé d'un volant de direction, d'un système de commande de direction, et de quatre roues directrices découplées du volant et pilotées par le système de commande de direction.

La présente invention concerne plus particulièrement un procédé de contrôle d'une assistance latérale pour des véhicules équipés de quatre roues directrices.

### Etat de la technique

Notre invention concerne un procédé d'assistance de contrôle de direction d'un véhicule équipé de quatre roues directrices, notamment un procédé pour ramener un véhicule dans sa voie de circulation.

De manière connue, un véhicule automobile équipé de quatre roues directrices comprend deux systèmes de contrôle de braquage des roues avant et des roues arrière. Un premier système permet une assistance de contrôle de direction des roues avant à partir de différentes mesures comprenant des mesures de l'angle au volant et de la vitesse du véhicule. Un second système de contrôle permet le braquage des roues arrière en fonction de mesures qui comprennent également la vitesse du véhicule et l'angle de braquage des roues avant.

Il est aussi connu que pour assurer une sécurité des occupants du véhicule, un système de remise en ligne du véhicule est rajouté à l'assistance de direction. Ledit système permet de ramener ledit véhicule dans une trajectoire conforme aux dispositions de la route.

Le véhicule est ainsi doté d'un système de direction qui comporte un calculateur de contrôle pour permettre le pilotage d'un actionneur apte à agir sur la direction du véhicule, pour réaliser une aide au suivi de la voie de circulation, et susceptible d'indiquer au conducteur un écart par rapport à la voie normale de circulation, en particulier dans des cas de manque de vigilance, d'endormissement ou malaise. Ces fonctions d'aide à la conduite sont connues sous la terminologie « Lane Departure Avoidance » ou « Lane Keeping Assist » (LKA).

La réalisation de ces fonctions repose notamment sur la mesure de la position du véhicule par rapport à sa voie de circulation et, en particulier sur la mesure de l'écart latéral du véhicule par rapport à des marquages latéraux au sol délimitant la voie sur laquelle circule le véhicule et sur la mesure de l'angle de cap relatif du véhicule. Typiquement, ces mesures sont réalisées à l'aide d'une caméra embarquée à l'avant du véhicule et au moyen d'algorithmes de traitement d'image associés à la caméra, capables de détecter les lignes blanches au sol et de fournir l'écart latéral du véhicule par rapport à ces lignes blanches et l'angle de cap relatif du véhicule. On connait un problème important pour réaliser les fonctions actives de « Lane Keeping Assist » et « Lane Departure Avoidance » qui est d'assurer une bonne réponse dynamique du véhicule compte tenu de la variation de la vitesse ou de la courbure de la route qui peuvent être significatives, ou encore que l'erreur initiale par rapport à la trajectoire cible peut être importante.

Un autre facteur de difficultés concerne les véhicules comportant quatre roues directrices. En effet, ces véhicules peuvent comporter deux systèmes d'assistance de contrôle de direction dont un pour les roues avant et un second pour les roues arrière. Lesdits systèmes sont généralement indépendants l'un de l'autre pour des raisons de sécurité. Ainsi pour le système d'assistance de contrôle des roues avant, Il convient de maitriser l'influence du braquage des roues arrière, notamment lors de la séquence de ramener le véhicule selon l'axe de conduite.

La publication EP1790512 présente un système d'évitement de sortie de voie en se basant uniquement sur le freinage différentiel des roues. Cette action est limitée par la saturation des pneus et ne peut pas assurer un suivi de voie en permanence. De plus, aucune indication sur le confort des passagers pendant la correction n'est donnée.

La publication ITB0960552 propose un système qui permet aux roues arrière d'un véhicule de s'auto-diriger lors d'une manoeuvre en marche arrière. Pour se faire, les roues arrière du véhicule sont reliées à un circuit hydraulique qui autorise un pivotement des roues arrière proportionnel à l'angle de braquage des roues avant lorsqu'il est en marche arrière. Ceci permet de réduire le rayon de braquage et réduire l'usure des pneus.

Le document de brevet JPS62113651-A présente un système pour un véhicule équipé de 4 roues directrices qui prend en compte les caractéristiques de la suspension du véhicule, ledit système est apte à modifier le ratio entre l'angle au volant et les roues pour suivre la trajectoire voulue par le conducteur en fonction des modifications des caractéristiques de la suspension d'un véhicule afin de diminuer les risques de sur virage ou de sous virage dans la trajectoire le véhicule. Le document ne propose pas une prise en compte de l'angle braquage des roues arrière pour corriger l'assistance de direction des roues avant.

La publication JP2010179800-A propose de réduire le mouvement de lacets que peut rencontrer un véhicule à 4 roues directrices lorsque le système de contrôle des roues arrière tombe en panne. Le mouvement de lacets est dû au frottement des roues avec la surface de la route. On propose donc d'analyser l'effet de la panne du système de contrôle pour ensuite utiliser le système de direction assistée pour compenser la trajectoire du véhicule. Un inconvénient de ce document est la méconnaissance de l'angle de braquage des roues arrière pour corriger l'assistance de direction des roues avant notamment pour maintenir le véhicule dans la voie de circulation, le profil d'angle braquage consigne généré aux roues avant ne permettant plus au véhicule de revenir correctement dans sa voie de circulation lors d'une correction qui inclue le braquage des roues arrière.

La publication FR3062359-A1 propose un procédé d'aide à la conduite pour véhicule automobile dans lequel on calcule un angle de braquage des roues directrices du véhicule de manière à maintenir le véhicule dans une voie de circulation. L'angle de braquage est calculé à partir d'un modèle dynamique du véhicule et à partir de paramètres portant sur le comportement du véhicule et respectant des critères de sécurité et de confort du conducteur. Cependant le procédé ne prend pas en compte le braquage des roues arrière actionné par un dispositif et un système de contrôle indépendant.

Le document JP 2013 086672 A montre un procédé avec les caractéristiques techniques du préambule de la revendication 1.

Un inconvénient des enseignements présentés ci-avant est que l'on ne prend pas en compte l'angle de braquage des roues arrière dans le contrôle d'assistance des roues avant notamment pour les systèmes de remise en ligne des véhicules. En effet, les systèmes de contrôle d'assistance des roues avant et des roues arrière peuvent être différents et/ou indépendants et un angle de braquage des roues arrière peut constituer une perturbation dans le contrôle d'assistance de direction des roues avant ainsi que pour la remise en ligne du véhicule.

Le but de l'invention est de remédier à ces problèmes et un des objets de l'invention est un procédé d'aide à la conduite pour véhicule automobile, dans lequel on calcule un angle de braquage de roues directrices avant du véhicule de manière à maintenir le véhicule dans une voie de circulation, à partir d'un modèle dynamique du véhicule et à partir de paramètres portant sur le comportement du véhicule et respectant des critères de sécurité et de confort du conducteur et sur l'angle de braquage des roues arrière.

## Présentation de l'invention

La présente invention concerne plus particulièrement un procédé d'aide à la conduite pour véhicule automobile, dans lequel on calcule un angle de braquage de roues directrices avant du véhicule de manière à maintenir le véhicule dans une voie de circulation à partir d'un modèle dynamique du véhicule et à partir de paramètres portant sur le comportement du véhicule et sur une mesure de l'angle de braquage des roues arrière.

Plus particulièrement, la présente invention concerne un procédé d'aide à la conduite pour véhicule automobile comportant un système de contrôle d'assistance des roues avant et des roues arrière, dans lequel on calcule un angle de braquage de roues directrices avant du véhicule de manière à maintenir le véhicule dans une voie de circulation à partir d'un modèle dynamique du véhicule, caractérisé en ce que le procédé comporte une correction due au braquage des roues arrière comprenant les étapes successives suivantes :

- une étape de mesures de paramètres de conduite comportant une mesure d'angle de braquage des roues arrière,
- une étape de détermination de facteurs de gain à appliquer à des valeurs mesurées de paramètres de dynamique du véhicule, ladite détermination des valeurs de gain étant effectuée hors ligne avec des contraintes de confort et de sécurité du conducteur.
- une étape de détermination d'une correction de l'angle de braquage des roues avant due au braquage des roues arrière et des facteurs de correction de braquage des roues avant issus des étapes précédentes.

De manière avantageuse, le procédé comprend une mesure de l'angle de braquage des roues arrière qui peut être obtenue par un système d'assistance de direction des roues arrière indépendant, cette valeur est prise en compte dans le calcul la valeur de l'angle de braquage des roues avant afin de maintenir le véhicule automobile dans une voie de circulation et notamment de rectifier les écarts latéraux de conduite.

De manière avantageuse, la détermination de l'angle de braquage des roues avant comprend une première étape de détermination de facteurs de correction transversale en fonction des paramètres de sécurité de conduite et de confort du conducteur, ladite étape étant indépendante de l'angle de braquage des roues arrière, ce qui facilite le calcul, et une deuxième étape de détermination de la correction dépendante de l'angle de braquage des roues arrière. La première étape a en contraintes des critères de sécurité et de confort du conducteur. L'angle de braquage des roues arrière n'influe pas sur la détermination des facteurs de correction transversale de la première étape.

La première étape de calcul est effectuée depuis un modèle dynamique du véhicule basé sur un modèle bicyclette.

Selon d'autres caractéristiques de l'invention :

La correction varie linéairement avec l'angle de braquage des roues arrière.

La correction de l'angle de braquage due au braquage des roues arrière est proportionnelle audit angle de braquage des roues arrière ce qui simplifie le calcul et la détermination de la correction à apporter.

- la correction est fonction de deux valeurs de gain.

De manière avantageuse, la correction due à l'angle de braquage des roues arrière est fonction de deux valeurs de gain de correction, lesdites valeurs de gain sont calculées dans la première étape indépendamment de l'angle de braquage des roues arrière.

La correction due à l'angle de braquage des roues arrière est fonction de deux valeurs de gain déterminées dans l'étape précédente et de la valeur de l'angle de braquage des roues arrière ce qui facilite la détermination de ladite correction.

- la correction due à l'angle de braquage des roues arrière est fonction de la valeur du gain de tenue de glissement.

De manière avantageuse, la correction est fonction du gain de tenue de glissement et notamment la correction varie en sens opposé de la variation du gain de tenue de glissement.

- la correction due à l'angle de braquage des roues arrière est fonction de la valeur du gain de tenue de cap.

De manière avantageuse, la correction est fonction du gain de tenue de cap et notamment la correction varie dans le même sens que la variation du gain de tenue de cap.

- les critères de sécurité du conducteur comprennent un critère imposant qu'en régime permanent l'erreur de l'écart de la position latérale entre le centre de gravité du véhicule et le centre de la voie converge vers une erreur latérale nulle, et un critère imposant que pour un ensemble de conditions initiales prédéfinies la valeur de cet écart est inférieure à une valeur fixe prédéfinie.
- les critères de confort du conducteur comprennent un critère qui impose que la vitesse latérale du véhicule soit bornée par une valeur garantissant un niveau acceptable de confort perçu par le conducteur, un second critère qui impose que l'accélération latérale et la dérivée de la vitesse de lacet soient bornées, et un troisième critère qui impose que les vitesses minimale et maximale de convergence en boucle fermée soient bornées.

L'invention concerne également un dispositif d'aide au maintien dans la voie d'un véhicule automobile à quatre roues directrices apte à définir des commandes de braquage des roues avant et comprenant au moins une entrée de réception d'au moins une grandeur représentative d'un ou plusieurs écarts entre une trajectoire de référence et une trajectoire effective du véhicule, et d'autre part au moins une sortie de production en temps réel d'au moins une consigne de braquage applicable à au moins une roue avant du véhicule de manière à maintenir et/ou ramener ledit véhicule sur sa trajectoire de référence, caractérisé en ce qu'il comprend un module de correction en temps réel de ladite consigne de braquage des roues avant, qui varie avec la mesure d'angle de braquage de la roue arrière

**Brève description des figures**

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :

[fig.1] est une vue schématique de véhicule automobile avec 4 roues directrices
[fig.2] est un schéma de modélisation de parcours du véhicule avec 4 roues directrices.
[fig.3] est un schéma de système de contrôle en boucle fermée.
[fig.4] est schéma du système de contrôle selon l'invention.
[fig.5] est un schéma de prise en compte de perturbations dans la détermination de l'angle de braquage des roues avant selon l'invention.

Description détaillée des figures

Dans la description qui va suivre, des chiffres de référence identiques désignent des pièces identiques ou ayant des fonctions similaires.

Les véhicules automobiles peuvent être équipés de dispositifs d'aide à la conduite. Certains de ces dispositifs sont conçus de telle sorte qu'ils permettent d'assister le conducteur pour maintenir le véhicule dans la voie de circulation délimitée par des lignes imprimées sur la chaussée. Ils agissent sur la direction du véhicule en modifiant l'angle de braquage des roues directrices du véhicule. La détermination de l'angle de braquage adaptée à la situation du véhicule repose sur un algorithme de commande contenu dans le dispositif d'aide à la conduite. Il met en oeuvre une loi de commande et utilise un modèle dynamique du véhicule. La loi de commande peut être du type aide au maintien dans la voie, LKA (en anglais Lane Keeping Assist).

Selon la figure 1, le véhicule automobile 10 selon l'invention est un véhicule équipé de quatre roues directrices. Il comprend un châssis 10', deux roues avant directrices 11 et 12 et deux roues arrière directrices 21 et 22, les roues étant reliées au châssis 10' par un mécanisme de suspension.

Le véhicule comprend un premier système de direction disposé entre les roues avant 11 et 12, un actionneur de braquage 14 apte à orienter les roues avant 11 et 12.

Le véhicule comporte aussi différents moyens connus de mesures de position spatiale et de déplacement du véhicule. Lesdits moyens peuvent être des capteurs de position spatiale, de vitesses et d'accélérations, de mesure d'angle de braquage des roues, de caméra de manière préférentielle positionnée à l'avant du véhicule pour reconnaitre la route. Ces différents capteurs permettent d'avoir des valeurs de la position du véhicule par rapport à l'axe de la voie de circulation, de vitesses longitudinale, transversale du véhicule et de lacet c'est-à-dire de rotation autour d'un axe perpendiculaire au plan du véhicule, d'angle de braquage des roues avant et arrière et de profil de la voie de circulation. Par exemple, les capteurs de position 31 et de vitesses 32 peuvent être de type différent, optique ou magnétique, les capteurs de mesure d'angle de braquage 33 peuvent être intégrés à un actionneur de braquage 14, le capteur de lacet peut être un gyroscope. La caméra frontale 34 est apte à fournir des informations ou données pour enduire le profil de la route et notamment l'écart latéral du véhicule par rapport à la voie de circulation.

Lesdites données sont inscrites dans le tableau ci-dessous :

[Tableaux1]

| *Nom* | *Unité* | *Description* |
|---|---|---|
| $\beta$ | *rad* | Angle de glissement |
| $r$ | *rad/s* | Vitesse de la lacet |
| $\psi_L$ | *rad* | Angle de cap relatif |
| $l$ | *m* | Empattement du véhicule |
| $l_r$ | *m* | Distance centre de gravité/essieu arrière |
| $l_f$ | *m* | Distance centre de gravité/essieu avant |
| $c_f$ | *Nm/rad* | Rigidité en virage au niveau de la roue avant |
| $c_r$ | *Nm/rad* | Rigidité en virage au niveau de la roue arrière |
| $J$ | $kg.m^2$ | Moment d'inertie du véhicule (ou moment d'inertie de lacet) au centre de gravité |
| $y_L$ | *m* | Ecart latéral |
| $V$ | *m/s* | La vitesse longitudinale du véhicule |
| $P_{ref}$ | $m^{-1}$ | Courbure de la route |
| $l_s$ | *m* | Distance de visée |
| $\delta_f$ | *rad* | Angle des roues avant |
| $\delta_r$ | *rad* | Angle des roues arrière |
| $\delta_{ref}$ | *rad* | Référence d'angle de braquage des roues avant |
| $\Phi_r$ | *rad* | Angle de devers de la route |

Certaines données sont des valeurs caractéristiques du véhicule et sont donc connues et mises en mémoire.

Le véhicule comporte aussi un second système de commande de braquage des roues arrière, et un actionneur 23 permettant d'orienter lesdites roues arrière 21 et 22 ainsi que des capteurs de l'angle de braquage des roues arrière.

Le véhicule comprend un dispositif 100 de maintien du véhicule dans sa voie de circulation dont l'objet est de maintenir ou de ramener le véhicule 10 dans ladite voie de circulation.

L'objectif du dispositif de maintien 100 du véhicule est de maintenir le véhicule 10 dans sa voie de circulation courante lorsqu'une sortie de voie volontaire ou involontaire est détectée. La figure 2 représente schématiquement le véhicule 10 en circulation et dans une courbe. L'axe de circulation X est donc courbe et on peut voir les différentes variables de circulation du véhicule définies dans le tableau 1. La prise de décision sur le moment d'application d'une correction latérale est assurée par un module de supervision s'appuyant sur les données issues de capteurs de perception, par exemple la caméra frontale 34. Une fois le système activé, la direction assistée électrique est pilotée en couple, en incluant le conducteur et l'environnement dans la boucle de commande, dans le but de ramener le véhicule vers le centre de la voie.

Le dispositif 100 comprend les moyens de mesures et d'actionnement décrits précédemment.

Le dispositif 100 comprend une première unité de commande 50 apte à déterminer un angle de braquage des roues avant à réception d'écarts sur un vecteur d'état X comprenant 4 variables d'état portant sur l'angle de glissement ou de dérive $\beta$, la vitesse de lacet *r*, l'angle de cap relatif $\psi_L$ et l'écart latéral $y_L$

On rappelle que dans le domaine technique considéré, la vitesse de rotation du véhicule autour d'un axe Z perpendiculaire au plan du véhicule passant par exemple par les deux essieux de roues du véhicule, est nommée vitesse de lacet.

La vitesse de lacet étant la dérivée par rapport au temps de l'angle de cap effectif du véhicule, elle est définie par la formule :

[Math.1]

$$r = d\frac{\psi}{dt} = \frac{d\psi_d}{dt} + \frac{d\psi_L}{dt}$$

L'unité de commande 50 est apte à fournir des valeurs de commande pour ramener le véhicule selon l'axe de conduite. Lesdites valeurs concernent des valeurs spatiales qui seront traduites ensuite par des valeurs d'efforts selon une méthode connue qui n'est pas décrite ici.

Une deuxième unité de commande 51 peut déterminer l'angle de braquage des roues arrière. La première 50 et la deuxième unité 51 peuvent travailler indifféremment l'une de l'autre. La détermination de l'angle de braquage des roues arrière n'entre pas dans le cadre de l'invention.

La détermination de la commande de braquage peut être basée sur un modèle bicyclette qui représente la dynamique du véhicule avec des paramètres de dynamique du véhicule qui sont les variables d'état $\beta$, *r*, $\psi_L$, et $y_L$

De manière connue, le modèle bicyclette assimile le véhicule 10 à une barre filiforme qui passe par le centre de gravité CG du véhicule et qui comporte le même moment d'inertie autour d'un axe perpendiculaire au plan de la figure passant par le centre de gravité, et la même masse M que le véhicule. On se réfère à un repère plan orthonormé ($O_a$, $X_a$, $Y_a$)

La trajectoire 30 de référence est représentée dans un repère absolu orthonormé. A chaque instant, la position du véhicule est repérée par rapport à un point $O_t$ de la trajectoire qui constitue l'origine d'un repère relatif cinématique {$O_t$, $X_t$, $Y_t$ } dans lequel l'axe de circulation $X_t$ est tangent à la trajectoire au point $O_t$. L'axe $X_t$ fait un angle $\psi_d$ avec l'axe $X_a$ du repère absolu. L'angle $\psi_d$ est généralement nommé angle de cap visé dans le domaine technique auquel appartient l'invention.

Lorsque le véhicule suit parfaitement sa trajectoire à l'instant t, le centre de gravité CG est confondu avec le point $O_t$ de la trajectoire. Ce n'est pas le cas lorsque le centre de gravité CG est déporté sur l'axe $Y_t$ qui est perpendiculaire à l'axe $X_t$ dans le plan de la figure 2.

Le centre de gravité CG constitue l'origine d'un repère relatif lié {CG, $X_{CG}$, $Y_{CG}$} au véhicule dans lequel l'axe $X_{CG}$ est colinéaire à la barre à laquelle le véhicule est assimilé dans le modèle bicyclette. Le repère relatif lié {CG, $X_{CG}$, $Y_{CG}$} fait un angle $\psi_L$ avec le repère relatif cinématique {$O_t$, $X_t$, $Y_t$ }. La valeur de l'angle $\psi_L$ est nulle dans le cas idéal où le véhicule est dirigé selon la tangente à la trajectoire 30. Dans le cas contraire, une valeur non nulle de l'angle $\psi_L$ constitue un écart de trajectoire.

Par rapport au repère absolu {$0_a$, $X_a$, $Y_a$}, le centre de gravité CG se déplace à une vitesse $V_{CG}$ dont le vecteur, exprimé dans le repère relatif lié {$O_t$, $X_{CG}$, $Y_{CG}$} fait un angle $\beta$ avec l'axe $X_{CG}$. Le vecteur de vitesse au centre de gravité comporte alors une composante v = $V_{CG}$•cos $\beta$ selon l'axe $X_{CG}$ et une composante u = $V_{CG}$•sin $\beta$ selon l'axe $Y_{CG}$. La vitesse u correspond à une vitesse de ripage transversale au véhicule. La vitesse v correspond à une vitesse longitudinale du véhicule égale à la vitesse $V_{CG}$ en absence de ripage. L'angle $\beta$ est généralement nommé angle de dérive.

Sur le modèle bicyclette représenté dans la figure 2, les roues avant 11 et 12 sont représentées par une roue unique avant qui fait un angle $\delta_f$ avec l'axe $X_{CG}$ à une distance $1_f$ du centre de gravité CG, distance non reportée sur la figure par souci de clarté. La roue unique avant présente une rigidité de dérive égale à la somme des rigidités de dérive $C_f$ de chacune des roues 11 et 12, généralement de valeurs identiques caractéristiques connues du fournisseur de pneumatique des roues ou au moyen d'essais de roulage sur circuit.

De même, les roues arrière 21 et 22 sont représentées par une roue unique arrière qui fait un angle $\delta_r$ avec l'axe $X_{CG}$ à une distance $L_r$ du centre de gravité CG, distance ici encore non reportée sur la figure par souci de clarté.

Pour ramener le véhicule dans sa voie de circulation, selon l'état de l'art, Il est connu de définir une commande de braquage et de compenser par des corrections portant sur la courbure $\rho_{ref}$ de la route selon l'équation ci-dessous :

[Math.2]

$$\underbrace{\begin{pmatrix}\dot{\beta}\\ \dot{r}\\ \dot{\psi}_L\\ \dot{y}_L\end{pmatrix}}_{\dot{x}}=\underbrace{\begin{bmatrix}-\frac{C_f+C_r}{mv} & -1+\frac{C_r l_r-C_f l_f}{mv^2} & 0 & 0\\ -\frac{C_f l_f-C_r l_r}{J} & -\frac{C_r l_r^2+C_f l_f^2}{Jv} & 0 & 0\\ 0 & 1 & 0 & 0\\ v & l_s & v & 0\end{bmatrix}}_{A}\underbrace{\begin{pmatrix}\beta\\ r\\ \psi_L\\ y_L\end{pmatrix}}_{x}+\underbrace{\begin{bmatrix}0\\ 0\\ -v\\ 0\end{bmatrix}}_{B_\rho}\rho_{ref}+\underbrace{\begin{bmatrix}\frac{C_f}{mv}\\ \frac{C_f l_f}{J}\\ 0\\ 0\end{bmatrix}}_{B\delta_f}\delta_f$$

Cependant il est également nécessaire que l'algorithme de contrôle des roues avant, hébergé dans la première unité 50, puisse compenser l'effet de braquage des roues $\delta r$ arrière contrôlées par la seconde unité, de manière à ne pas créer de conflit d'objectifs entre les deux unités de contrôle.

Le fonctionnement d'un système de contrôle ou de régulation est représenté en figure 3. L'architecture de contrôle selon l'invention est hébergé dans la première unité de commande 50, et peut être vue globalement en 4 blocs et deux boucles inter-connectées comme représenté en figure 3. On distingue ainsi :

- Un premier contrôleur 101 appelé contrôleur haut niveau et dénommé Hi-Ctrl a pour objectif de générer une référence d'angle de braquage $\delta_{ref}$des roues avant. Cette référence est générée de manière à ce que la voiture se retrouve au centre de sa voie de circulation après le dépassement d'une ligne. Les paramètres dynamiques du véhicule comprennent l'angle de dérive $\beta$, la vitesse de lacet r, l'angle de cap $\psi_L$ , la position latérale entre l'axe du véhicule et la trajectoire en avant du véhicule $y_L$ . On calcule $\delta_{ref}$à l'aide des paramètres d'état $\beta$, r, $\psi_L$ , et $y_L$ décrivant la dynamique du véhicule.
- Un second contrôleur 102 appelé contrôleur bas niveau et dénommé Lo-Ctrl a pour objectif de piloter la direction assistée électrique ou DAE en couple de manière à ce que l'angle des roues avant de la voiture suive l'angle de référence fourni par le contrôleur haut niveau Hi-Ctrl. Un couple de correction généré sera calculé depuis la différence entre l'angle des roues mesuré et l'angle $\delta_{ref}$.
- Un actionneur 103 de la loi de commande représente le comportement dynamique de la DAE. Il prend en entrée un couple moteur et sort un angle de braquage des roues avant.
- Un processus 104 de la loi de commande est basé sur un modèle bicyclette. Le modèle bicyclette représente la dynamique de la voiture en générant par exemple l'écart latéral $y_L$ par rapport au centre de la voie depuis un angle de braquage des roues en entrée. Le modèle bicyclette est un modèle très utilisé pour décrire le comportement d'un véhicule.
- Une boucle principale 105 de commande ou OUTER LOOP est une boucle de contrôle appelée également boucle externe ou boucle de haut niveau, liée au contrôleur de haut niveau. Ladite boucle principale fixe la direction à suivre pour que la voiture revienne au centre de sa voie après un dépassement de ligne.
- Une boucle secondaire 106 d'actionnement ou INNER LOOP est la boucle de contrôle et également appelée boucle interne ou boucle de bas niveau, liée au contrôleur de bas niveau. C'est elle qui fait en sorte que la voiture suive la direction fixée par le contrôleur de haut niveau.

Selon la figure 4, la première unité de commande 50 exécute un procédé 60 comportant une commande par retour d'état 26 couplée avec plusieurs termes de correction par anticipation ou FeedFoward (FFD) qui viennent légèrement amplifier la consigne d'angle braquage des roues avant pour prendre en compte par exemple dans la correction de trajectoire, la courbure de la route $\rho_{ref}$ ou son devers naturel $\Phi_r$ et selon l'invention, l'angle de braquage $\delta r$ des roues arrière.

Selon l'invention, le procédé 60 comprend :

- une étape de mesure de l'angle de braquage des roues arrière,
- une étape de détermination de facteurs de gain K à appliquer à des valeurs mesurées de paramètres de dynamique du véhicule, ladite détermination de K étant effectuée hors ligne avec des contraintes de confort et de sécurité du conducteur.
- une étape de détermination d'une correction de l'angle de braquage des roues avant due au braquage des roues arrière et des facteurs de correction de braquage des roues avant issus des étapes précédentes.

Le fonctionnement d'un système de commandes de braquage des roues avant en boucle fermée est représenté en figure 4. Une valeur de consigne de position transversale $Y_c$ est fournie en entrée et entraine une valeur Y en sortie dudit système. Ladite valeur de consigne passe selon une branche principale 61 par un correcteur 23, un actionneur 63 et le système du véhicule 64 ; la boucle est complétée avec une branche de retour 65 comportant un moyen de mesure d'écart 66.

Des perturbations 67 sont entrées dans le système 64 du véhicule. Lesdites perturbations comprennent l'angle de devers $\varphi_r$ de la route et l'angle de courbure $\rho_{ref}$ de la route ainsi que l'angle de braquage $\delta_r$ des roues arrière.

Pour déterminer les efforts pour ramener le véhicule sur son axe X de circulation, il convient de retenir seulement l'écart selon l'axe transversal Y, de la position du véhicule par rapport à l'axe de circulation.

On considère que l'actionneur n'amène pas de perturbations supplémentaires. Il peut être considéré comme parfait. Le capteur de position est également considéré comme parfait. La boucle principale de commandes est réduite au correcteur et au système du véhicule.

La valeur de consigne d'écart en entrée du système est naturellement nulle. En effet l'objectif est que la voiture reste au centre de sa voie, c'est-à-dire avec un écart latéral nul vis-à-vis de la cible visée, un angle de cap relatif nul.

Suivant la branche principale au passage du correcteur 1a valeur de consigne est transformée en une valeur de référence d'angle de braquage des roues avant. Ladite valeur de référence est passée en entrée dans le système du véhicule comme représenté en figure 4.

On arrive à l'égalité suivante :

[Math.3]

$$\underbrace{\begin{pmatrix}\dot{\beta}\\ \dot{r}\\ \dot{\psi}_L\\ \dot{y}_L\end{pmatrix}}_{\dot{x}}=\underbrace{\begin{bmatrix}-\frac{C_f+C_r}{mv} & -1+\frac{C_r l_r-C_f l_f}{mv^2} & 0 & 0\\ -\frac{C_f l_f-C_r l_r}{J} & -\frac{C_r l_r^2+C_f l_f^2}{Jv} & 0 & 0\\ 0 & 1 & 0 & 0\\ v & l_s & v & 0\end{bmatrix}}_{A}\underbrace{\begin{pmatrix}\beta\\ r\\ \psi_L\\ y_L\end{pmatrix}}_{x}+\underbrace{\begin{bmatrix}0\\ 0\\ -v\\ 0\end{bmatrix}}_{B_\rho}\rho_{ref}+\underbrace{\begin{bmatrix}\frac{C_f}{mv}\\ \frac{C_f l_f}{J}\\ 0\\ 0\end{bmatrix}}_{B_{\delta_f}}\delta_f+\underbrace{\begin{bmatrix}\frac{C_r}{mv}\\ -\frac{C_r l_r}{J}\\ 0\\ 0\end{bmatrix}}_{B_{\delta_r}}\delta_r+\begin{bmatrix}-\frac{g}{V}\\ 0\\ 0\\ 0\end{bmatrix}\phi_r.$$

où β est l'angle de dérive, r est la vitesse de lacet, $\Psi_L$ est l'angle relatif de cap entre l'axe du véhicule et la tangente à la trajectoire de référence, $y_L$ est l'écart latéral entre le centre de gravité du véhicule et l'axe de la voie, $\rho_{ref}$ est la courbure de la route, $\delta_f$est l'angle de braquage des roues avant.

Les paramètres considérés dans le modèle sont les suivants :

$C_f$ est la rigidité de dérive des roues avant, $C_r$ est la rigidité de dérive des roues arrière, $l_f$ est la distance du centre de gravité à l'essieu avant, $l_r$ est la distance du centre de gravité à l'essieu arrière, m est la masse totale du véhicule, V est la vitesse du véhicule, J est l'inertie du véhicule autour d'un axe vertical passant par son centre de gravité et $l_S$ est la distance de visée.

Nous considérons pour la suite de la description qu'une stratégie spécifique pour compenser l'effet de devers existe déjà et nous ne tiendrons pas compte du dernier terme �$_r$.

Le modèle bicyclette considéré selon l'invention est donc le suivant :

[Math.4]

$$\underbrace{\begin{pmatrix}\dot{\beta}\\ \dot{r}\\ \dot{\psi}_L\\ \dot{y}_L\end{pmatrix}}_{\dot{x}}=\underbrace{\begin{bmatrix}-\frac{C_f+C_r}{mv} & -1+\frac{C_r l_r-C_f l_f}{mv^2} & 0 & 0\\ -\frac{C_f l_f-C_r l_r}{J} & -\frac{C_r l_r^2+C_f l_f^2}{Jv} & 0 & 0\\ 0 & 1 & 0 & 0\\ v & l_s & v & 0\end{bmatrix}}_{A}\underbrace{\begin{pmatrix}\beta\\ r\\ \psi_L\\ y_L\end{pmatrix}}_{x}+\underbrace{\begin{bmatrix}0\\ 0\\ -v\\ 0\end{bmatrix}}_{B_\rho}\rho_{ref}+\underbrace{\begin{bmatrix}\frac{C_f}{mv}\\ \frac{C_f l_f}{J}\\ 0\\ 0\end{bmatrix}}_{B_{\delta_f}}\delta_f+\underbrace{\begin{bmatrix}\frac{C_r}{mv}\\ -\frac{C_r l_r}{J}\\ 0\\ 0\end{bmatrix}}_{B_{\delta_r}}\delta_r$$

De la forme

[Math.5]

$$\dot{x} = Ax + B_\rho \rho_{ref} + B_{\delta_f}\delta_f + B_{\delta_r}\delta_r$$

Avec

[Math.6]

$$y = C.x + D.\delta_f$$

L'opérateur *a* désigne la dérivée par rapport au temps de la variable a.

Selon l'invention, on considère que tous les états du système sont mesurés, La matrice C est dans ce cas-là une matrice identité pour et la matrice D une matrice nulle car la sortie mesurée dépend uniquement des états du système.

On a donc:

[Math.7]

$$\underline{y} = \underline{C}\,\underline{x} = x$$

L'objet de l'invention concerne le correcteur du système en boucle fermée. Il est composé d'un module de retour d'état et de plusieurs modules de compensation FFD.

Le correcteur est assimilé à un vecteur de gain K qui est susceptible d'être paramétré. Le gain K est défini selon les quatre états d'un vecteur d'état qui concernent les mouvements de glissement, de lacet, de cap et d'écart latéral. Le vecteur de gain K est de dimension égale à celle du vecteur d'état x ; il est donc composé de quatre valeurs de gain qui concernent selon successivement l'angle de glissement, la vitesse de lacet, l'angle de cap relatif et l'écart transversal.

[Math.8]

$$K = [K_\beta \quad K_r \quad K_{\psi_L} \quad K_{y_L}]$$

L'angle de retour d'état $\delta_f$ est obtenu en effectuant le produit scalaire du vecteur de gain K par le vecteur d'état x.

[Math.9]

$$\delta_{Stfck} = K\varepsilon = K(y_c - y) = -Ky = -K.C.x = -K.x$$

$\delta_{Stfck}$ est l'angle de retour d'état en boucle fermée. L'équation correspond bien à un retour d'état classique.

Les déterminations des valeurs de commande, notamment des valeurs de gain suivent des critères concernant la sécurité et le confort du conducteur.

La sécurité du conducteur est assurée en limitant les mouvements latéraux du véhicule.

Un premier critère de sécurité concerne l'écart latéral maximal du véhicule limité à une valeur seuil fixe établie en avance. L'écart latéral $|y_L|$peut être défini comme la distance entre le centre de gravité du véhicule et le centre de la voie de circulation. On prendra la valeur absolue de la valeur $|y_L|$.

Ladite valeur seuil est fonction de la largeur de la route qui est susceptible de varier selon le parcours du véhicule.

Naturellement, l'objectif étant de ramener le véhicule dans sa voie de circulation, en régime permanent l'écart latéral $|y_L|$ est nul ou tend vers une valeur nulle.

Le premier critère est transposé dans l'équation suivante :

[Math.10]

$$|y_L| < \Delta\text{max}$$

La valeur seuil $\Delta$max est fonction de la largeur de la route. La sécurité du conducteur est donc assurée en maintenant des valeurs d'écart latéral inférieures audit seuil.

Le confort du conducteur est sauvegardé en assurant des mouvements non brusques du véhicule.

Un premier critère de confort concerne la vitesse latérale du véhicule dont l'amplitude est limitée par un seuil de vitesse garantissant un niveau acceptable de confort perçu par le conducteur.

Ledit premier critère de confort est transposé dans l'inéquation suivante :

[Math.11]

$$|\dot{y}_L| < \nabla\text{max}$$

Avec $\nabla$max étant le seuil de vitesse latérale garantissant le confort du conducteur.

Un deuxième critère de confort concerne l'accélération latérale et la dérivée de la vitesse de lacet ou jerk qui doivent être bornées.

En effet, pour le confort du conducteur, l'accélération latérale et le jerk, qui sont respectivement proportionnels à la vitesse de lacet et sa dérivée pour une vitesse de véhicule constante, doivent être bornés.

La détermination des valeurs de commande doit suivre des critères de convergence de calculs pour des algorithmes temps réel.

On posera deux critères de convergence de calculs qui sont :

- L'écart latéral doit converger vers une erreur latérale nulle d'une manière robuste.
- Les vitesses minimale et maximale de convergence du système en boucle fermée doivent être bornées.

L'ensemble des critères de sécurité, de confort et de convergence des calculs produisent un ensemble d'équations ou d'inéquations à résoudre conduisant à déterminer les valeurs du vecteur de gain K hors ligne. Un exemple de résolution est défini dans le document FR3062359-A1. Lesdites valeurs sont ensuite introduites dans les équations pour déterminer les valeurs de position spatiales du véhicule.

En boucle fermée, l'angle de référence de braquage $\delta_{ref}$ des roues avant est la somme de l'angle de retour d'état et des angles issues des corrections dues aux perturbations

[Math.12]

$$\delta_{ref} = \delta_f = \delta_{Stfck} + (\delta_{4RD}\delta_r + \delta_\phi\phi_r + \delta_\rho\rho_{ref}) = -K.x + (\delta_{4RD}\delta_r + \delta_\phi\phi_r + \delta_\rho\rho_{ref})$$

Pour faciliter la compréhension, on regroupe les valeurs issues de perturbations

[Math.13]

$$\delta_{ff} = \delta_{4RD}\delta_r + \delta_\phi\phi_r + \delta_\rho\rho_{ref}$$

L'équation se réduit alors :

[Math.14]

$$\delta_{ref} = \delta_f = \delta_{Stfck} + \delta_{ff}$$

En reprenant l'équation 2 d'état avec ces valeurs d'angles de braquage, on obtient :

[Math.15]

$$\dot{x} = Ax + B_\rho\rho_{ref} + B_{\delta_f}\delta_f + B_{\delta_r}\delta_r$$

[Math.16]

$$\dot{x} = (A + B_{\delta_f}.-K)x + B_\rho\rho_{ref} + B_{\delta_f}\delta_{ff} + B_{\delta_r}\delta_r$$

En posant :

[Math.17]

$$A_{cl} = A - B_{\delta_f}K = A + B_{\delta_f}K_1$$

avec

[Math.18]

$$K_1 = - K$$

L'équation 2 peut s'écrire en boucle fermée :

[Math.19]

$$\dot{x} = A_{cl}x + B_\rho\rho_{ref} + B_{\delta_f}\delta_{ff} + B_{\delta_r}\delta_r$$

en régime permanent les dérivées sont nulles ce qui entraine l'équation suivante.

[Math.20]

$$0 = A_{cl}x_{ss} + B_\rho\rho_{ref} + B_{\delta_f}\delta_{ff} + B_{\delta_r}\delta_r$$

Avec $x_{ss}$ le vecteur d'état associé au régime permanent.

Ledit vecteur d'état s'exprime donc :

[Math.21]

$$x_{ss} = -A_{cl}^{-1}(B_\rho \rho_{ref} + B_{\delta_f}\delta_{ff} + B_{\delta_r}\delta_r)$$

Avec

[Math.22]

$$A_{cl} = A + B_{\delta_f}K_1 = \begin{bmatrix} -\frac{C_f + C_r}{mv} & -1 + \frac{C_r l_r - C_f l_f}{mv^2} & 0 & 0 \\ -\frac{C_f l_f - C_r l_r}{J} & -\frac{C_r l_r^2 + C_f l_f^2}{Jv} & 0 & 0 \\ 0 & 1 & 0 & 0 \\ v & l_s & v & 0 \end{bmatrix} + \begin{bmatrix} \frac{C_f}{mv} \\ \frac{C_f l_f}{J} \\ 0 \\ 0 \end{bmatrix} [K_\beta \quad K_r \quad K_{\psi_L} \quad K_{y_L}]$$

Donc

[Math.23]

$$A_{cl} = \begin{bmatrix} -\frac{C_f + C_r}{mv} + \frac{C_f K_\beta}{mv} & -1 + \frac{C_r l_r - C_f l_f}{mv^2} + \frac{C_f K_r}{mv} & \frac{C_f K_{\Psi_L}}{mv} & \frac{C_f K_{y_L}}{mv} \\ -\frac{C_f l_f - C_r l_r}{J} + \frac{C_f l_f K_\beta}{J} & -\frac{C_r l_r^2 + C_f l_f^2}{Jv} + \frac{C_f l_f K_r}{J} & \frac{C_f l_f K_{\Psi_L}}{J} & \frac{C_f l_f K_{y_L}}{J} \\ 0 & 1 & 0 & 0 \\ v & l_s & v & 0 \end{bmatrix}$$

On en déduit les valeurs du vecteur d'état :

[Math.24]

$$x_{ss} = \begin{bmatrix} \frac{1}{C_r(l_f + l_r)}(C_r l_r l_f + C_r l_r^2 - l_f m v^2)\rho_{ref} + \delta_r \\ \rho_{ref} v \\ \frac{1}{C_r(l_f + l_r)}(l_f m v^2 - C_r l_r^2 - C_r l_r l_f - C_r l_f l_s - C_r l_r l_s)\rho_{ref} - \delta_r \\ x_{ss_\rho}\rho_{ref} + x_{ss_{\delta_r}}\delta_r + x_{ss_{\delta_f}}\delta_{ff} \end{bmatrix}$$

Avec

[Math.25]

$$y_L = x_{ss_\rho}\rho_{ref} + x_{ss_{\delta_r}}\delta_r + x_{ss_{\delta_f}}\delta_{ff}$$

En régime permanent l'écart transversal doit être nul.

[Math.26]

$$0 = y_L = x_{ss_\rho}\rho_{ref} + x_{ss_{\delta_r}}\delta_r + x_{ss_{\delta_f}}\delta_{ff}$$

On en déduit la valeur de

[Math.27]

$$\delta_{ff} = \underbrace{\left[-\frac{mv^2\left(C_f l_f K_{\Psi_L} + C_f l_f - C_f l_f K_\beta - C_r l_r\right)}{C_f C_r\left(l_f + l_r\right)} + l_f + l_r - K_\beta l_r - K_r v + K_{\Psi_L} l_s + K_{\Psi_L} l_r\right]}_{\delta_\rho}\rho_{ref} + \underbrace{\left[1 + K_{\Psi_L} - K_\beta\right]}_{\delta_{4RD}}\delta_r$$

Le deuxième terme de représente alors la correction due au braquage des roues arrière.

La correction est donc fonction de deux facteurs de gain qui sont les facteurs de gain selon l'angle de cap relatif $\psi_L$ et selon l'angle de glissement $\beta$.

Plus précisément, ladite correction varie dans le même sens que le gain selon l'angle de cap relatif et dans le sens opposé à la variation du gain associé à l'angle de glissement.

La correction est proportionnelle à l'angle de braquage des roues arrière.

L'objectif est atteint :

La détermination de l'angle de braquage des roues avant est corrigé en ajoutant un terme due à l'angle de braquage arrière. Cette correction varie de façon linéaire avec l'angle de braquage des roues arrière. Le facteur de proportionnalité est fonction de deux facteurs de gain qui sont calculés de manière connue hors ligne avec des critères de sécurité, de confort du conducteur et de convergence des algorithmes temps réel.

Comme il va de soi, l'invention ne se limite pas aux seules formes d'exécution de cette prise, décrites ci-dessus à titre d'exemples, elle en embrasse au contraire toutes les variantes.

## Revendications

1. Procédé (60) d'aide à la conduite pour véhicule automobile comportant un système de contrôle d'assistance des roues avant et des roues arrière et des moyens de mesure de position spatiale et de déplacement du véhicule, dans lequel on calcule un angle de braquage ($\delta_{ref}$) de roues directrices avant du véhicule de manière à maintenir le véhicule dans une voie de circulation à partir d'un modèle dynamique du véhicule, **caractérisé en ce que** le procédé comporte une correction due au braquage des roues arrière comprenant les étapes successives suivantes :

   - une étape de mesures de paramètres de conduite comportant une mesure d'angle de braquage ($\delta_r$) des roues arrière,
   - une étape de détermination hors ligne de facteurs de gain de correction transversale (K) en fonction des critères de sécurité de conduite et des critères de confort du conducteur et qui concernent l'angle de glissement, la vitesse de lacet, l'angle de cap relatif et l'écart transversal,
   - une étape de détermination de correction ($\delta_{4RD}$ )de l'angle de braquage des roues avant due au braquage des roues arrière ($\delta_r$) déterminée avec la mesure d'angle de braquage des roues arrière et des facteurs de correction de braquage (K) des roues avant issus de l'étape précédente, **caractérisé en ce que** la correction ($\delta_{4RD}$) est fonction de la valeur d'un gain de tenue de glissement ($K_\beta$), et/ou d'un gain de tenue de cap ($K_{\psi L}$).

2. Procédé (60) selon la revendication 1, **caractérisé en ce que** la correction ($\delta_{4RD}$) varie linéairement avec à l'angle de braquage ($\delta_r$ ) des roues arrière.

3. Procédé (60) selon l'une des revendications 1 ou 2, **caractérisé en ce que** la correction ($\delta_{4RD}$) est fonction de deux valeurs de gain de correction (K).

4. Procédé selon l'une quelconque des revendications 1 à 5, dans lequel la détermination des facteurs de gain suit des critères de sécurité du conducteur qui comprennent un critère imposant qu'en régime permanent l'erreur de l'écart de la position latérale ($Y_L$) ≪ entre le centre de gravité du véhicule et le centre de la voie converge vers une erreur latérale nulle, et un critère imposant que pour un ensemble de conditions initiales prédéfinies la valeur de cet écart est inférieure à une valeur fixe prédéfinie (Δmax).

5. Procédé (60) selon l'une quelconque des revendications 1 à 6, dans lequel la détermination des facteurs gain suit des critères de de confort du conducteur qui comprennent un critère qui impose que la vitesse latérale du véhicule ( $\dot{y}_L$) soit bornée par une valeur (∇max) garantissant un niveau acceptable de confort perçu par le conducteur, un second critère qui impose que l'accélération latérale et la dérivée de la vitesse de lacet soient bornées

6. Procédé (60) selon l'une quelconque des revendications 1 à 7, dans lequel la détermination des facteurs de gain (K) suit des critères de convergence de calculs qui imposent que les vitesses minimale et maximale de convergence en boucle fermée soient bornées

7. Dispositif (100) d'aide au maintien dans la voie d'un véhicule automobile à quatre roues directrices comportant d'une part au moins une entrée de réception d'au moins une grandeur représentative d'un écart transversal ( $Y_L$) entre une trajectoire de référence et une trajectoire effective du véhicule, et d'autre part au moins une sortie de production en temps réel d'au moins une consigne de braquage applicable à au moins une roue avant du véhicule (1) de manière à maintenir et/ou ramener ledit véhicule sur sa trajectoire de référence, **caractérisé en ce qu'**il comprend un module de correction en temps réel de ladite consigne de braquage des roues avant qui varie avec la mesure d'angle de braquage de la roue arrière selon un procédé (60) selon les revendications 1 à 8.

8. Véhicule automobile comprenant un dispositif d'aide au maintien dans la voie selon la revendication 9.

**Patentansprüche**

1. Fahrassistenzverfahren (60) für ein Kraftfahrzeug, umfassend ein Hilfssteuerungssystem für die Vorderräder und die Hinterräder und Mittel zum Messen der räumlichen Position und der Fortbewegung des Fahrzeugs, wobei anhand eines dynamischen Modells des Fahrzeugs ein Lenkwinkel ($\delta_{ref}$) von gelenkten Vorderrädern des Fahrzeugs berechnet wird, um das Fahrzeug auf einer Fahrbahn zu halten, **dadurch gekennzeichnet, dass** das Verfahren eine Korrektur aufgrund des Lenkwinkels der Hinterräder umfasst, beinhaltend die folgenden aufeinanderfolgenden Schritte:

   - einen Schritt des Messens von Fahrparametern, der das Messen eines Lenkwinkels ($\delta_r$) der Hinterräder umfasst,
   - einen Schritt des Offline-Bestimmens von Verstärkungsfaktoren einer transversalen Korrektur (K) in Abhängigkeit von den Fahrsicherheitskriterien und den Komfortkriterien für den Fahrer und betreffend den Schräglaufwinkel, die Giergeschwindigkeit, den relativen Kurswinkel und die transversale Abweichung,
   - einen Schritt des Bestimmens einer Korrektur ($\delta_{4RD}$) des Lenkwinkels der Vorderräder aufgrund des Lenkwinkels der Hinterräder ($\delta_r$), die mit der Lenkwinkelmessung der Hinterräder und Faktoren zur Korrektur des Lenkwinkels (K) der Vorderräder, die aus dem vorhergehenden Schritt stammen, bestimmt wird, **dadurch gekennzeichnet, dass** die Korrektur ($\delta_{4RD}$) von dem Wert einer Verstärkung des Haltens des Schräglaufs ($K_\beta$) und/oder einer Verstärkung des Haltens des Kurses ($K_{\Psi L}$) abhängt.

2. Verfahren (60) nach Anspruch 1, **dadurch gekennzeichnet, dass** die Korrektur ($\delta_{4RD}$) mit dem Lenkwinkel ($\delta_r$) der Hinterräder linear variiert.

3. Verfahren (60) nach einem der Ansprüche 1 oder 2, **dadurch gekennzeichnet, dass** die Korrektur ($\delta_{4RD}$) von zwei Korrekturverstärkungswerten (K) abhängt.

4. Verfahren nach einem beliebigen der Ansprüche 1 bis 5, wobei die Bestimmung der Verstärkungsfaktoren Sicherheitskriterien für den Fahrer folgt, die ein Kriterium, das vorgibt, dass in einem stationären Betrieb der Fehler der Abweichung der seitlichen Position ($Y_L$) zwischen dem Schwerpunkt des Fahrzeugs und der Mitte der Bahn gegen einen seitlichen Fehler von null konvergiert, und ein Kriterium, das vorgibt, dass für eine Gesamtheit von vordefinierten Anfangsbedingungen der Wert dieser Abweichung kleiner als ein vordefinierter fester Wert (Δmax) ist, beinhalten.

5. Verfahren (60) nach einem beliebigen der Ansprüche 1 bis 6, wobei die Bestimmung der Verstärkungsfaktoren Komfortkriterien für den Fahrer folgt, die ein Kriterium, das vorgibt, dass die seitliche Geschwindigkeit des Fahrzeugs ($\dot{y}L$) durch einen Wert (∇max) begrenzt wird, der ein akzeptables Niveau an durch den Fahrer empfundenen Komfort garantiert und ein zweites Kriterium, das vorgibt, dass die seitliche Beschleunigung und die Ableitung der Giergeschwindigkeit begrenzt sind, beinhalten.

6. Verfahren (60) nach einem beliebigen der Ansprüche 1 bis 7, wobei die Bestimmung der Verstärkungsfaktoren (K) Berechnungskonvergenzkriterien folgt, die vorgeben, dass die minimale und maximale Konvergenzgeschwindigkeit in geschlossener Schleife begrenzt sind.

7. Assistenzvorrichtung (100) zum Halten eines Kraftfahrzeugs mit vier gelenkten Rädern auf der Bahn, umfassend einerseits mindestens einen Eingang zum Empfangen mindestens einer Größe, die für eine transversale Abweichung ($Y_L$) zwischen einer Referenztrajektorie und einer tatsächlichen Trajektorie des Fahrzeugs repräsentativ ist, und andererseits mindestens einen Ausgang zum Produzieren mindestens eines Lenkwinkelsollwerts in Echtzeit, der auf mindestens ein Vorderrad des Fahrzeugs (1) anzuwenden ist, um das Fahrzeug auf seiner Referenztrajektorie zu halten oder auf diese zurückzuführen, **dadurch gekennzeichnet, dass** sie ein Modul zur Echtzeit-Korrektur des Lenkwinkelsollwerts der Vorderräder, welcher mit der Lenkwinkelmessung des Hinterrads variiert, gemäß einem Verfahren (60) nach den Ansprüchen 1 bis 8 beinhaltet.

8. Kraftfahrzeug, das eine Assistenzvorrichtung zum Halten auf der Bahn nach Anspruch 9 beinhaltet.

**Claims**

1. Advanced driver-assistance method (60) for assisting with driving a motor vehicle comprising an assistance system for controlling the front wheels and rear wheels and means for measuring the spatial position and movement of the vehicle, wherein a steering angle ($\delta_{ref}$) of front steered wheels of the vehicle is computed so as to keep the vehicle in a traffic lane based on a dynamic model of the vehicle, **characterized in that** the method comprises a correction due to steering of the rear wheels comprising the following successive steps:

   - a step of taking measurements of driving parameters comprising a measurement of the steering angle ($\delta_r$) of the rear wheels,
   - a step of determining transverse correction gain factors (K) off-line depending on driving safety criteria and on driver comfort criteria and that regard angle of friction, yaw rate, angle of relative heading and transverse deviation,
   - a step of determining a correction ($\delta_{4RD}$) of the steering angle of the front wheels due to steering of the rear wheels ($\delta_r$), the correction being determined with the measurement of the steering angle of the rear wheels and steering correction factors (K) of the front wheels generated in the preceding step, **characterized in that** the correction ($\delta_{4RD}$) is dependent on the value of a slip holding gain ($K_\beta$), and/or a heading holding gain ($K\psi_L$).

2. Method (60) according to Claim 1, **characterized in that** the correction ($\delta_{4RD}$) varies linearly with the steering angle ($\delta_r$) of the rear wheels.

3. Method (60) according to either of Claims 1 and 2, **characterized in that** the correction ($\delta_{4RD}$) is dependent on two correction gain values (K).

4. Method according to any one of Claims 1 to 5, wherein determination of the gain factors complies with driver safety criteria comprising a criterion requiring that in the steady state the error in the deviation in lateral position ($Y_L$) between the centre of gravity of the vehicle and the centre of the lane converges to a lateral error of zero, and a criterion requiring that for a set of predefined initial conditions the value of this deviation is less than a predefined set value (Δmax).

5. Method (60) according to any one of Claims 1 to 6, wherein determination of the gain factors complies with driver comfort criteria comprising a criterion that requires the lateral speed of the vehicle ($\dot{y}_L$) to be bounded by a value (Vmax) guaranteeing an acceptable level of comfort as perceived by the driver, and a second criterion requiring the lateral acceleration and the derivative of the yaw rate be bounded.

6. Method (60) according to any one of Claims 1 to 7, wherein determination of the gain factors (K) complies with computation convergence criteria that require the minimum and maximum closed-loop convergence rates to be bounded.

**7.** Device (100) for assisting with keeping in its lane a motor vehicle with four steered wheels comprising on the one hand at least one input for receiving at least one quantity representative of a transverse deviation ($Y_L$) between a reference path and an actual path of the vehicle, and on the other hand at least one output for producing in real time at least one steering setpoint applicable to at least one front wheel of the vehicle (1) so as to keep and/or return said vehicle to its reference path, **characterized in that** it comprises a module for correcting in real time said steering setpoint of the front wheels, which varies with the measurement of the steering angle of the rear wheel according to a method (60) according to Claims 1 to 8.

**8.** Motor vehicle comprising a lane-keeping-assist device according to Claim 9.

[Fig. 1]

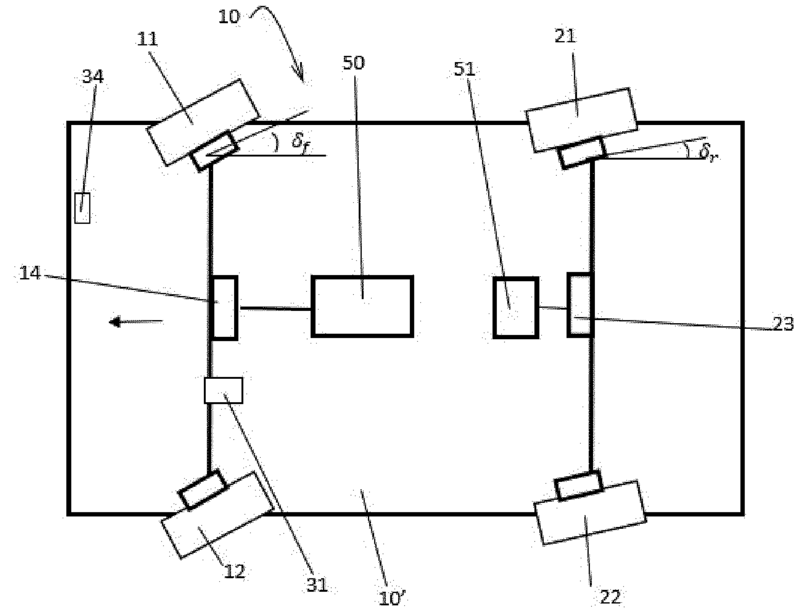


[Fig. 2]

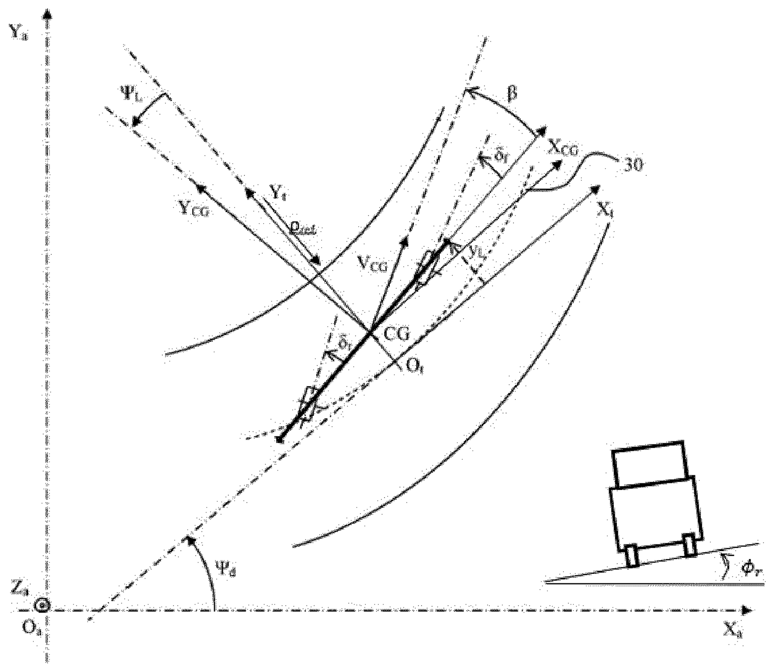


[Fig. 3]

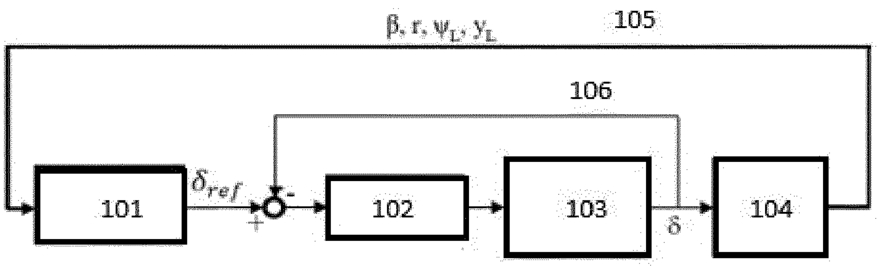

[Fig. 4]

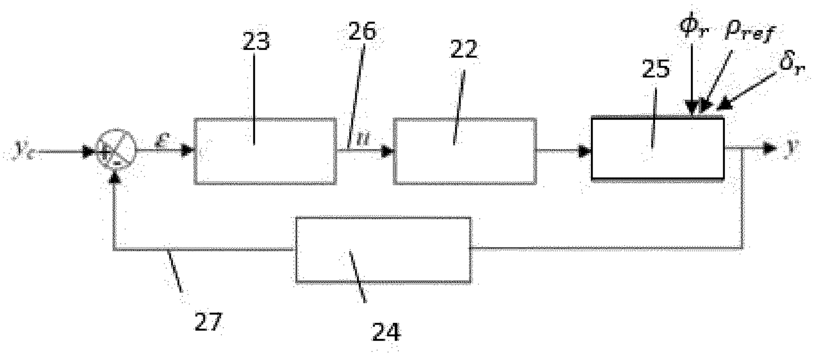
23
26
22
$\phi_r$ $\rho_{ref}$
$\delta_r$
25
$y_c$
+
-
$\varepsilon$
u
y
27
24

[Fig. 5]

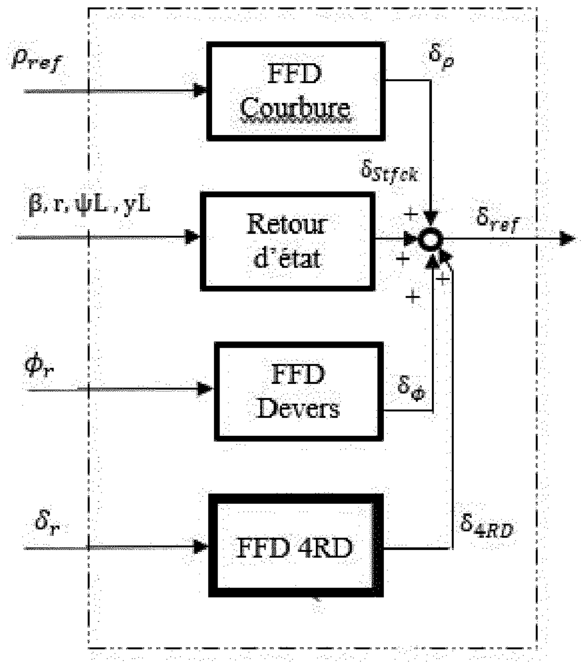
$\rho_{ref}$
FFD Courbure
$\delta_\rho$
$\delta_{Stfck}$
β, r, ψL , yL
Retour d'état
$\delta_{ref}$
+
+
+
+
$\phi_r$
FFD Devers
$\delta_\phi$
$\delta_r$
FFD 4RD
$\delta_{4RD}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1790512 A
- JP S62113651 A
- JP 2010179800 A
- FR 3062359 A1
- JP 2013086672 A